# EUROPEAN PATENT SPECIFICATION

(11) **EP 1 383 014 B1**
(45) Date of publication and mention of the grant of the patent: **25.03.2015**
(21) Application number: 03012796.3
(22) Date of filing: 05.06.2003
(51) Int. Cl.: G03G 21/18, G03G 15/00, G06F 11/00, G06F 11/10

(54) **Buffer memory with two storage areas, cartridge and image forming apparatus using the same; memory control method for double-checking an update, program and computer-readable recording medium therefor**
Pufferspeicher mit zwei Speicherbereichen, Arbeitseinheit und Bilderzeugungsgerät damit; Speichersteuerung zum Überprüfen einer Aktualisierung, Computerprogramm und computerlesbares Speichermedium dafür
Mémoire tampon ayant deux zones d'enregistrement, unité de traitement et appareil pour la formation d'images utilisant celui-ci; procédé de commande de mémoire pour vérifier la mise à jour de données d'information perdues, programme à cet effet et support d'enregistrement associé lisible par l'ordinateur

(30) Priority: 07.06.2002 JP 2002167656
(43) Date of publication of application: 21.01.2004
(73) Proprietor: CANON KABUSHIKI KAISHA, Tokyo (JP)
(72) Inventor: Chihara, Hiroshi, Ohta-ku, Tokyo (JP)
(74) Representative: TBK

(56) References cited:
- EP-A- 1 089 133
- EP-A- 1 211 575
- US-A- 5 150 462
- US-A1- 2002 018 657
- US-B1- 6 360 231

## Description

### FIELD OF THE INVENTION

The present invention relates to an image forming apparatus to which a cartridge for image formation process is removably attached, the cartridge, and together with a memory mounted on the cartridge or the apparatus.

### BACKGROUND OF THE INVENTION

Conventionally, in a copier, a laser-beam printer or the like using an electrophotographic technology, an image forming apparatus where various image forming elements are provided as a unit and removably attached to the apparatus main body has been provided. When the life of the unit has expired, it is exchanged with a new one. The image forming apparatus is managed in this manner.

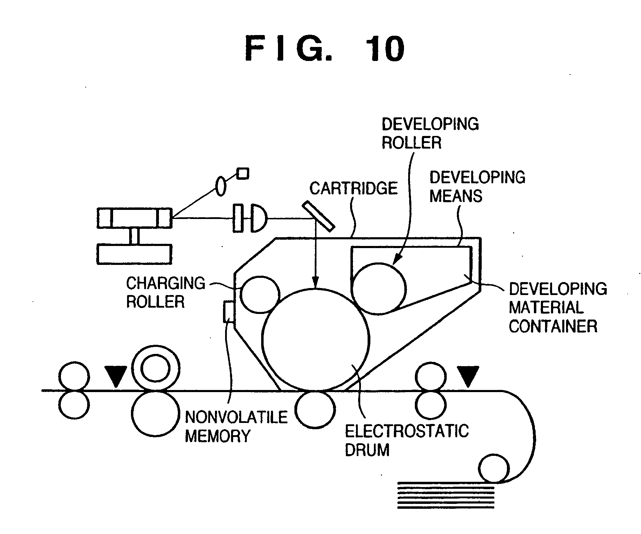

As shown in Fig. 10, the unit used for image formation is a cartridge including an electrostatic drum as an image holder, a charging roller as a charging member to uniformly charge the surface of the electrostatic drum, and a developing device including a developing roller and a developing material container as a developing member for supplying toner as developing material to the electrostatic drum. The cartridge is removably attached to the apparatus main body.

In recent years, a cartridge with a nonvolatile memory (e.g. an EEPROM(hereinbelow, "memory")) has been utilized as the above cartridge. The cartridge with memory holds information on life of the cartridge such as accumulated time of drum revolution and the remaining amount of toner. A printer controller judges the life of the toner cartridge based on the information obtained by communication, and determines cancellation of print signal from a controller or the like.

Data can be written/read to/from the memory of the cartridge. That is, data writing/reading to/from the memory can be performed based on an instruction from the printer controller. Further, regarding data which has been written into the memory then it will not be rewritten, the data can be set to a rewriting-disabled status (locked). Once the data is locked, thereafter, writing cannot be made but only reading is possible from the corresponding area. Data locking is performed in 1 byte units, 2 byte units, 4 byte units, 40 byte units or the like. Thus a data size lockable at once differs in accordance with memory.

Further, a lockable data size is not necessarily fixed regarding all the data areas in a memory. In some memory, locking can be performed in 1 byte units in a part of the areas, and locking can be performed in 4 byte units in another part. In this manner, the lockable data size differs in this memory.

Among various data structures may be used for storage into the memory, a double-buffer structure is known as data structure for improvement of data reliability. The entire data is divided for a main buffer and a backup buffer, data indicating the same meaning is stored in the both buffers, and upon coincidence of the data between the both buffers, corresponding data is utilized as reliable data.

Further, as a method for increasing reliability, a check sum may be provided in respective buffers of the double-buffer structure. In this method, every time data is updated, the check sum is updated and stored. Further, the check sum is checked upon use of memory data in start-up of the apparatus main body, or the like, and if an abnormality is detected in the check sum, all the data in the buffer where the abnormality has been detected in the check sum is recovered by using data in the buffer where no abnormality has been detected in the check sum, thereby the memory can be used thereafter.

In the above conventional art, the data on the memory can be locked when it is determined that rewriting is not to be performed. Even if the data indicates only one of bit-representable 2 statuses, data lock is performed on a predetermined unit of area such as 1 byte (8 bits) according to the internal structure of the memory. That is, since the data size must be expanded to a lockable minimum unit, the efficiency of use of the data areas of the memory is lowered, and wasted data areas occur.

Further, in the case where the check sum is provided in the respective buffers of the double-buffer structure, the order of data storage is as follows.
(1) data update in main buffer
(2) check sum update in main buffer
(3) data lock in main buffer
(4) data update in backup buffer
(5) check sum update in backup buffer

In the stage (2), if an error occurs, the data in the main buffer is recovered by using the data in the backup buffer. When data rewrite instruction is issued again, data in the corresponding area is rewritten. In a case where interval between issuance of data rewrite instruction is very long, although data change timing has come once, data rewriting is not performed until the next data change timing comes.

Further prior art can be found in document US 2002 018 657 A1, disclosing an image forming apparatus constituted by an image forming apparatus main body and an apparatus unit having a non-volatile memory, which is provided in a toner cartridge, for storing prescribed data. By controlling the method in which data is written to a non-volatile memory, data content that has been rewritten in the memory due to the occurrence of a malfunction can be restored. The apparatus includes a detector for detecting and reporting amount of toner remaining in the cartridge. On the basis of this information, a memory controller writes data, which indicates that cartridge replacement is necessary, to a prescribed area of the non-volatile memory. A memory locking unit inhibits rewriting of this area once data has been written to this area. If it is judged by the memory controller that rewriting of the data halted in mid-course, write-protect by the memory lock function unit is cancelled and rewrite is allowed to be completed again, after which rewrite is inhibited.

Further prior art can be found in document US 5 150 462 A, disclosing an image data display system including a file unit for storing image data in compressed form, a display unit for displaying image data, a table for storing address information of a plurality of image data to be read from the file unit, a buffer memory having a memory area corresponding to at least two image frames for temporarily storing image data read from the file unit, an expansion processor for expanding image data in the buffer memory, a bit map memory for storing expanded image data, an output unit for outputting image data in the bit map memory to the display unit, an input unit for inputting a first command instructing a successive display of image data and a second command instructing a halt of the successive display, and a control unit responsive to the first command for switching in a predetermined order the buffer memory area used for storing image data read from the file unit and the buffer memory area used by the expansion processor and successively reading image data from the file unit while referring to the table, and responsive to the second command for halting the read operation of image data from the file unit, whereby a desired image frame successively displayed is rendered in a still state by the second command from the input unit.

### SUMMARY OF THE INVENTION

The present invention has been proposed to solve the above-described conventional problems, and has its object to provide an image forming apparatus which improves the efficiency of use of memory data areas, a cartridge, and a memory mounted on the cartridge.

Further, another object of the present invention is, when an abnormality occurs in memory data, to recover the memory status to a status close to a latest status.

The above mentioned objects are achieved by what is defined in the appended independent claims. Advantageous modifications thereof are set forth in the appended dependent claims.

Other features and advantages of the present invention will be apparent from the following description taken in conjunction with the accompanying drawings, in which like reference characters designate the same name or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a schematic cross-sectional view showing the structure of a general laser printer using the electrophotographic technology;
Fig. 2 is a block diagram showing the construction of a controller of the laser printer in Fig. 1;
Figs. 3A to 3C are explanatory views schematically showing allocation of data areas;
Figs. 4A and 4B are explanatory views showing data recovery in the present invention;
Fig. 5 is a flowchart showing data recovery processing according to an example which is useful for understanding the present invention;
Figs. 6A and 6B are explanatory views showing processing according to a first embodiment;
Figs. 7A and 7B are explanatory views showing processing according to a second embodiment of the present invention;
Fig. 8 is a flowchart showing the data recovery processing according to the first embodiment;
Fig. 9 is an explanatory view showing an example of data correction and data locking in a main buffer and a backup buffer; and
Fig. 10 is a schematic cross-sectional view showing the structure of the laser printer using the electrophotographic technology.

### DETAILED DESCRIPTION OF THE PREFERRED EMBODIMENTS

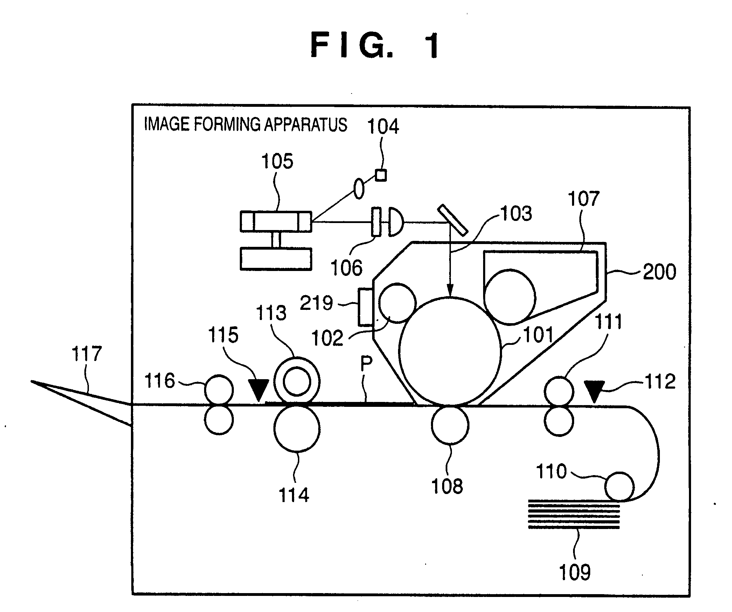

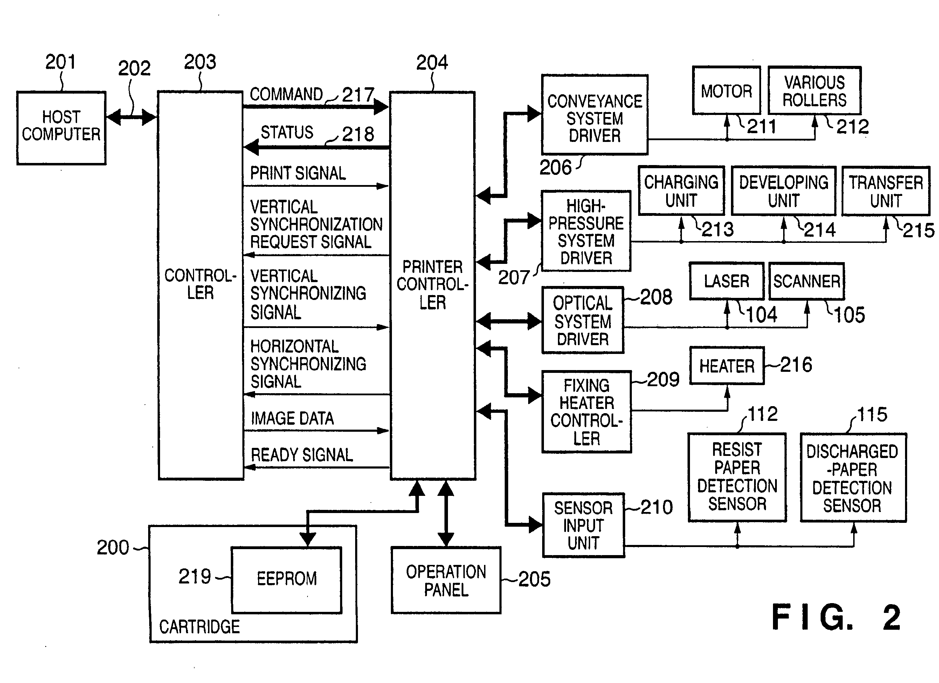

Preferred embodiments of the present invention will now be described in detail with reference to the drawings (Figs. 1 and 2).

Fig. 1 is a schematic cross-sectional view showing the structure of a laser printer using the electrophotographic technology to which the present invention is applicable. In Fig. 1, reference numeral 101 denotesan electrostatic drum as a latent image holder. A charging roller 102 which uniformly charges the surface of the electrostatic drum 101 is positioned above the drum in contact with the surface of the drum. A light beam 103 is emitted by light emitting means to a position of the charged surface of the electrostatic drum 101 on the downstream side in the rotational direction of the drum from the position in contact with the charging roller 102. The light emitting means is constituted with semiconductor laser 104 which emits the light beam 103, a scanner 105 which sways the light beam 103 on the above-described surface and an optical lens 106 which controls the light beam 103 so as to form a light spot on the above-described surface. The light beam 103 is emitted based on image data, thereby a latent image is formed on the above-described surface. The latent image is developed as a toner image by a developing device 107 in contact with the electrostatic drum 101 on the further downstream side in the rotational direction of the electrostatic drum 101 from the light-emitted position of the light beam 103.

The toner image is transferred onto paper P as a transfer material by a transfer roller 108 provided to be opposite to the electrostatic drum 101 below the drum. The paper P is set in a paper cassette 109 in front (on the right side in Fig. 1) of the electrostatic drum 101, however, the paper P can be manually fed to the printer. A paper-feed roller 110 is provided at an end of the paper cassette 109, and the paper-feed roller 110 sends the paper P in the paper cassette 109 to a conveyance path. Resist rollers 111 for correction of skewing of the paper P and synchronization between image formation on the electrostatic drum 110 and paper conveyance are provided in the middle of the conveyance path between the above-described paper-feed roller 110 and the transfer roller 108. The resist rollers 111 send the paper P to the above-described transfer position at predetermined timing. Note that a resist-paper detection sensor 112 is provided between the resist rollers 111 and the paper-feed roller 110 such that the sensor detects the presence/absence of the paper P.

The paper P on which the unfixed toner image has been transferred is further conveyed to a fixing device in the rear (on the left side in Fig. 1) of the electrostatic drum 101. The fixing device is constituted with a fixing roller 113 including a fixing heater (not shown) and a pressing roller 114 in press-contact with the fixing roller 113. The paper P holding the transferred toner image is pressed and heated in a press-contact position between the fixing roller 113 and the pressing roller 114, thereby the toner image is fixed onto the paper P. A discharged-paper detection sensor 115 which checks that the paper P is discharged from the press-contact position is provided in the rear of the press-contact position. Further, paper discharge rollers 116 are provided in the rear of the discharged-paper detection sensor 115. The paper P where the toner image has been fixed is discharged to a paper discharge tray 117 by the paper discharge rollers 116.

Next, the controller of the electrophotographic printer having the above mechanisms will be described with reference to Fig. 2. In Fig. 2, numeral 201 denotes a host computer provided outside the electrophotographic printer. The host computer sends image code data, generated by user's operation or the like as parallel or serial data, through a communication line 202 to a controller 203. The controller 203 develops the image code data sent from the host computer 201 thus converts the data to image information to be sent to the printer. Further, the controller 203 sends a command to a printer controller 204, reads data inside the printer controller as a status, and makes a print start request and a preparatory paper-feed request to the printer controller. Further, the controller 203 controls a synchronizing signal for synchronization between image output timing and paper conveyance in the printer. The controller 203 exists in the printer or in the host computer. Further, the printer controller 204 is connected to an operation panel 205 for the user's various mode settings (e.g. image-area margin setting) of the printer.

The controller 203 connected to the host computer 201 performs data transmission/reception with the printer controller 204 as described above. The printer controller 204 is connected to a conveyance system driver 206, a high-pressure system driver 207, an optical system driver 208, a fixing heater controller 209 and a sensor input unit 210 for drive/stop timing control of the respective mechanisms in Fig. 1 and for reading information inputted from the respective sensors.

First, the conveyance system driver 206 performs drive/stop of various motors 211 and various rollers 212, and the high-pressure system driver 207, drive/stop of charging unit 213, developing unit 214 and transfer unit 215 based on instructions from the printer controller 204. Further, the optical system driver 208 performs drive/stop of the laser 104 and the scanner 105 based on instructions from the printer controller 204. Further, the fixing heater controller 209 performs drive/stop of the fixing heater 216 based on an instruction from the printer controller 204. The sensor input unit 210 reads information from the resist paper detection sensor 112 and the discharged-paper detection sensor 115 and provides the information to the printer controller 204.

Next, the operation of the apparatus of the present invention will be described. First, the printer is in a waiting status for print-signal from the controller 203. If a print signal has not been received, the presence/absence of preparatory paper-feed request from the controller 203 is checked. If a preparatory paper-feed request has been received, the motor 211 is driven, then a paper-feed operation is started. Thereafter, it is checked whether or not the paper P arrives at the resist paper detection sensor 112. If the end of the paper is detected by the sensor 112, after a predetermined period of waiting, the paper-feed operation is stopped. At this time, the motor 211 is stopped and the printer returns to the print signal waiting status. When a print signal is received, the motor 211 is driven again, and at this time, the scanner 105 and the respective high-pressure units are started. When rotation of a scanner motor (not shown) becomes a predetermined number of revolutions, as the paper P has been already preparatorily fed, the resist paper detection sensor 112 checks the presence/absence of the paper P. At this time, if the paper P does not exist at the sensor 112, abnormality processing (jam processing or the like) is performed. Further, if the paper P exists at the sensor 112, a vertical synchronizing signal is outputted to the controller 203. Thereafter, when the vertical synchronizing signal is received, image writing to the electrostatic drum 101 is permitted, and the resist rollers 111 are driven. Then after a predetermined period of waiting from detection of an end of the paper by the discharged-paper detection sensor 115, the high-pressure units and the scanner motor are stopped, then the roller driving system motors are stopped, and printing processing is stopped.

As shown in Fig. 1, the electrostatic drum 101 as an image holder, the charging roller 102 as a charging member to uniformly charge the surface of the electrostatic drum 110 and the developing device 107 as developing means for supplying toner as developing material to the electrostatic drum 101 are provided in one unit, forming a removable cartridge 200.

Note that as units used for image formation, not only the above arrangement but a unit comprising the developing means 107 and the electrostatic drum 101, or a unit comprising only the developing means may be employed.

The cartridge 200 is provided with an EEPROM 219 as nonvolatile storage means. The EEPROM 219 holds information on life of the cartridge 200 such as accumulated time of drum revolution and the remaining amount of toner. The printer controller 204 of the apparatus main body judges the life of the cartridge 200 based on the information obtained by communication, and determines cancellation of print signal from the controller 203 or the like.

Note that the unit cartridge 200 is removably attached to the image forming apparatus main body. When the cartridge 200 is attached to the image forming apparatus main body, data communication is possible between the EEPROM 219 and the printer controller 204 as shown in Fig. 2. Although not shown here, as a data communication method, communication by connector connection, radio communication or any other communication can be used as long as it enables data transmission/reception with the nonvolatile memory such as an EEPROM.

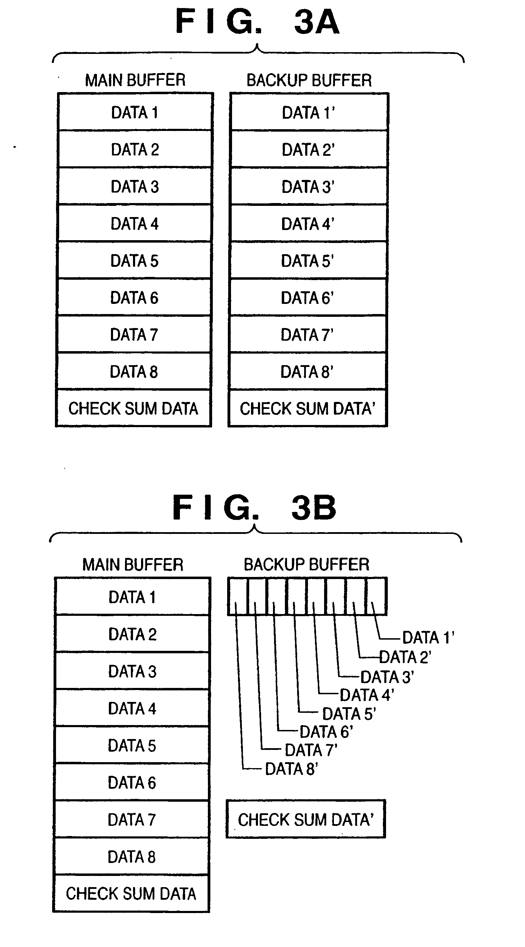

Next, a method for efficiently using data areas of the nonvolatile memory, storing data related to image formation such as data on the history of use and process conditions, in a process cartridge removably attached to the image forming apparatus main body using an electrophotographic process according to the present invention, will be described with reference to the drawings (Figs. 3A to 3C, 4A, 4B and 5. The memory has a main buffer and a backup buffer. In data to be stored in the main buffer, bit information (data) is expanded to a lockable data size, while in data to be stored in the backup buffer, data locking is not performed but shrunk in bit units and stored with originally-bit-unit other information into the backup buffer.

Figs. 3A and 3B are explanatory views schematically showing allocation of data areas in the EEPROM 219 in Fig. 2. First, a description will be made about a case where a 1-byte check sum information is held in the main buffer and the backup buffer. Fig. 3A shows data allocation in the conventional art. As shown in Fig. 3A, in a case where the lockable minimum data unit is 1 byte, 8 types of bit information are respectively expanded to 1 byte and allocated to respective data areas. In this example, 8-byte data area and 1-byte check sum data area are ensured in the main buffer. Similarly, in the backup buffer, 8-byte data area and 1-byte check sum data area are ensured. That is to store 8 bit data, 18 bytes of memory data area are used.

On the other hand, Fig. 3B shows data allocation according to the present invention. As shown in Fig. 3B, in the main buffer, 8-byte data area and 1-byte check sum data area are ensured as in the case of allocation in Fig. 3A. However, in the backup buffer, bit information (data) are handled in bit units, shrunk with other bit information and stored in a 1-byte area. In this arrangement, the data size including the check sum in the backup buffer is 2 bytes.

The data size of memory data area used in Fig. 3A is 18 bytes, whereas that used in Fig. 3B is 1 byte. In comparison with Fig. 3A, about 39% improvement is attained in the efficiency of use of memory area is in Fig. 3B.

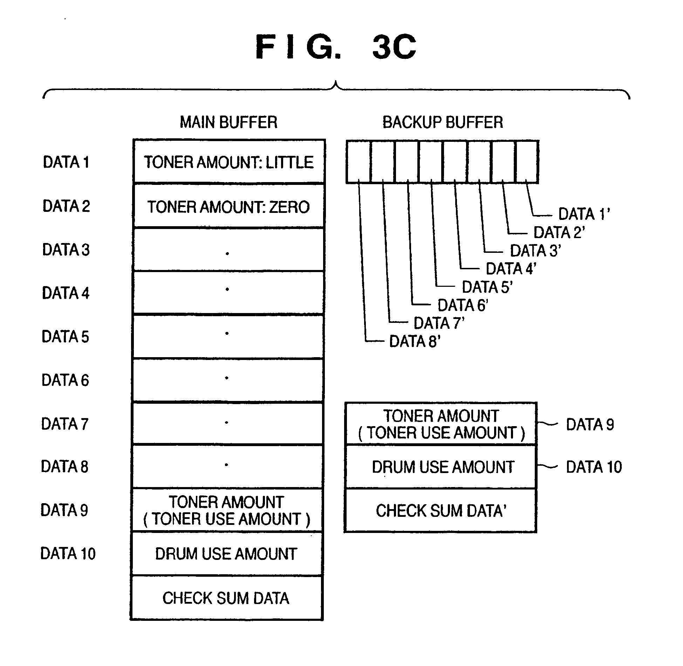

Note that Fig. 3C shows data stored in the EEPROM 219. The EEPROM 219 holds plural information such as information indicating a status where the remaining toner amount as the history of use of process cartridge is little or a status where the remaining toner amount is zero, or information on toner use amount (the remaining toner amount in the developing device indicated by "g" or "%"), information on drum use amount (drum rotation time, the number of print sheets) other than the status information. The information indicating the statuses "toner amount: little", "toner amount: zero" (set/reset status) or the like is backed up in bit units, and the information on toner use amount, the information on drum use amount and the like other than the status information are backed up in byte units as in the case of information in the main buffer. That is, as shown in Fig. 3C, the backup buffer in the EEPROM 219 of the process cartridge has a bit-unit backup storage area and a byte-unit backup storage area.

Next, a method for recovery of memory status upon occurrence of data abnormality to a status close to the latest status will be described.

In a case where bit information is expanded to a data lockable minimum size, e.g. 1 byte, the expanded data has only 2 values, i.e. an arbitrary value indicating a set status of the bit information (data-written status) and an arbitrary value indicating a reset status of the bit information (data). If the expanded data has other value than the 2 values, it can be considered that an abnormality has occurred. Further, in an area to be locked after rewriting, data change means changing from a default value to a predetermined value (if the default value indicates the set status, the predetermined value indicates the reset status, while if the default value indicates the reset status, the predetermined value indicates the set status). In this case, the value after the data change has a significant meaning. That is, upon occurrence of abnormality, the data in the corresponding area becomes the predetermined value with probability 1/256 in the case of data expanded to 1 byte, and 1/65536 in the case of data expanded to 2 bytes. This means that even in a case where a check sum indicates an abnormality, if the expanded data indicates the predetermined value, the value of the buffer showing the abnormality can be used without problem.

That is, in a case where a mechanism that data in an abnormality-occurred area becomes "00h" or "FFh" is clearly known, the reliability can be further improved by avoiding "00h" or "FFh" (when expanded to 1 byte) as the predetermined value indicating a changed value from the bit information (data).

Accordingly, in a case where data is expanded to e.g. 1 byte, even if a check sum abnormality has been determined regarding data in the main buffer, as long as the data of the main buffer has the predetermined value, the data value is used without recovery using a value in the backup buffer.

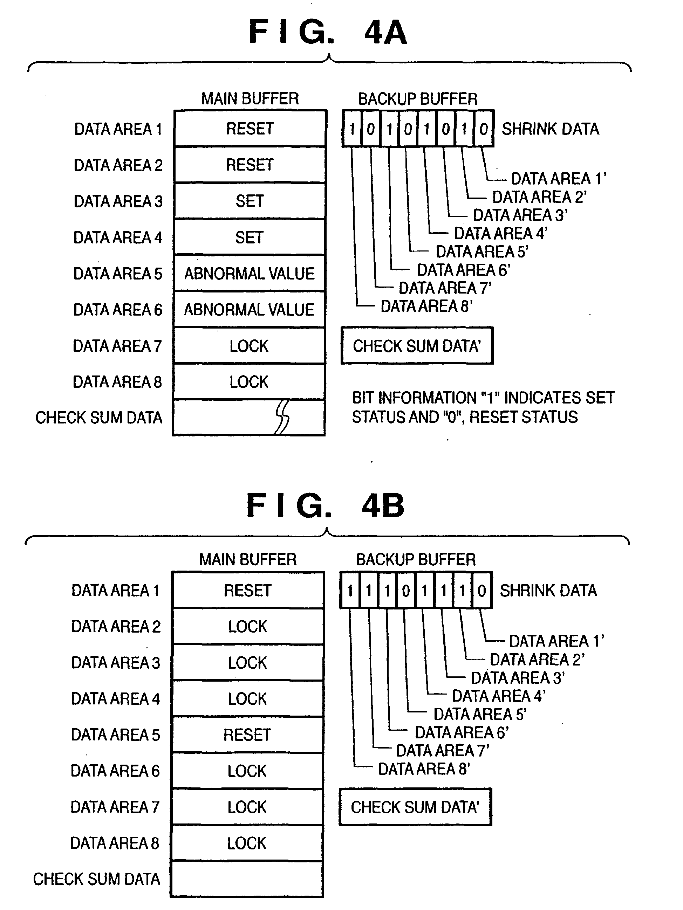

Figs. 4A and 4B are explanatory views showing data recovery in the present invention. For the sake of simplification of explanation, each data is changed from the reset status to the set status.

Fig. 4A shows statuses of the respective buffers and check sum data upon occurrence of abnormality. In this example, among the data areas 1 to 8 of the main buffer, the data areas 1 and 2 have a value indicating the reset status (hereinafter "reset status"), the data areas 3 and 4 have a value indicating the set status (hereinafter "set status"), the data areas 5 and 6 have an abnormal value (hereinafter "abnormal value") not indicating the "set status" nor the "reset status", and the data areas 7 and 8 have a value indicating the "set status" and these areas are further in a status where the data are locked (hereinbelow "locked status").

Note that in the main buffer, when the check sum (total sum) of the data areas 1 to 8 is calculated, a value stored in the check sum storage area and a calculated value do not correspond with each other. Further, in the backup buffer, information corresponding to the data areas 1 to 8 are alternately reset and set. When the check sum in the backup buffer is calculated, a stored value corresponds with a calculated value.

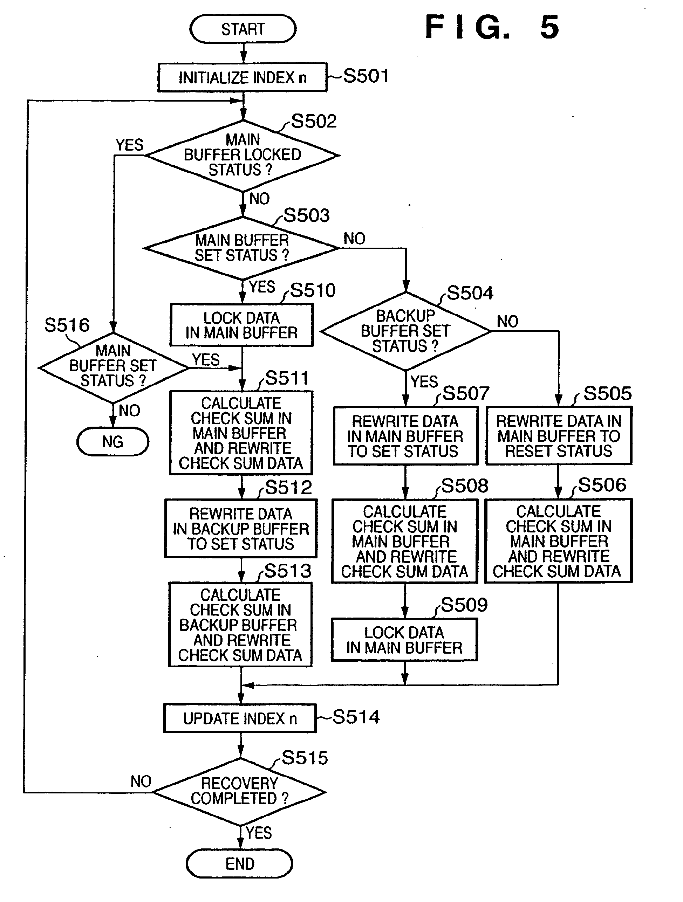

Fig. 5 is a flowchart showing data recovery processing according to an example which is useful for understanding the present invention. The control of the flowchart is executed by a program stored in a ROM (not shown) or the like in the printer controller 204 in Fig. 2.

First, at step S501, an index n indicating a data area of the main buffer and a bit area of the backup buffer is initialized to "1". Next, at step S502, it is determined whether or not the data area (n) of the main buffer is in the locked status. If it is not in the locked status, the process proceeds to step S503, at which it is determined whether or not the data area (n) of the main buffer is in the set status. If it is not in the set status, the process proceeds to step S504, at which it is determined whether or not the bit area (n) of the backup buffer is in the set status. If it is not in the set status, the process proceeds to step S505, at which the data area (n) of the main buffer is rewritten to the reset status. Next, at step S506, the check sum in the main buffer is calculated, and the data in the check sum storage area is rewritten.

In this manner, at steps S502 to S505, the data area (n) of the main buffer is in the reset status or shows the abnormal value and the bit area (n) of the backup buffer corresponds to the reset status. In the example of Fig. 4A, the reset status of the data area 1 and the abnormal value in the data area 5 are rewritten to the reset status as shown in Fig. 4B.

Further, at step S504, if the bit area (n) of the backup buffer is in the set status, the process proceeds to step S507, at which the data area (n) in the main buffer is rewritten to the set status. Next, at step S508, the check sum in the main buffer is calculated, and the data in the check sum storage area is rewritten. Then at step S509, the data area (n) of the main buffer is changed to the locked status.

In this manner, in the case of steps S504 -> S507, the data area (n) of the main buffer is in the reset status or shows the abnormal value, and the bit information in the bit area (n) of the backup buffer corresponds to the set status. In the example of Fig. 4A, the reset status of the data area 2 and the abnormal value in the data area 6 are rewritten to the set status, and further, these areas are respectively rewritten to the locked status as shown in Fig. 4B.

Further, at step S503, if the data area (n) of the main buffer is in the set status, the process proceeds to step S510, at which the data area (n) of the main buffer is changed to the locked status. Next, at step S511, the check sum in the main buffer is calculated, and the data in the check sum storage area is rewritten. Then at step S512, the bit area (n) of the backup buffer is rewritten to the set status. Next, at step S513, the check sum in the backup buffer is calculated, and data in the check sum storage area is rewritten.

In this manner, in the case of steps S503 -> S510, the data area (n) of the main buffer corresponds to the set status. In the example of Fig. 4A, the set status of the data area 3 and the data area 4 is respectively rewritten to the locked status as shown in Fig 4B. Then bit information in the bit area 3 of the backup buffer is rewritten to the set status.

Further, at step S502, if the data area (n) of the main buffer is in the locked status, the process proceeds to step S516, at which it is determined whether or not the data area (n) of the main buffer is in the set status. If the data area (n) of the main buffer is not in the set status, it is determined that the memory cannot be recovered. That is, in the present example, the data in the main buffer is changed to the locked status only at steps S509 and S510 since the data in the main buffer is in the set status. Further, if the data area (n) of the main buffer is in the set status, the process proceeds to step S511, to perform the above-described processing.

In this manner, in the case of steps S502 -> S516, the data area (n) of the main buffer corresponds to the locked status. In the example of Fig. 4A, the data area 7 and the data area 8 are in the locked status. As shown in Fig. 4B, bit information in the bit area 7 of the backup buffer is rewritten to the set status.

Next, when the above-described processing has been completed, the index n is updated at step S514, and at step S515, it is determined whether or not all the recovery has been completed. If the recovery has been completed, the process ends, while if the recovery has not been completed, the process returns to step S502, to repeat the above-described processing.

In a case where the check sum in the main buffer does not correspond with a calculated value but the check sum in the backup buffer corresponds with a calculated value, data recovery is performed in accordance with the following rules.
(1) Recovery is performed basically using a value in the backup buffer. When a value in the main buffer is changed to the set status, data locking is also performed. Note that this processing is performed except the following cases:
(2) If the value in the main buffer indicates the set status, the data in the backup buffer is changed to the set status. The value in the main buffer is locked.
(3) If the value in the main buffer indicates the locked status, the data in the backup buffer is changed to the set status.

### [First Embodiment]

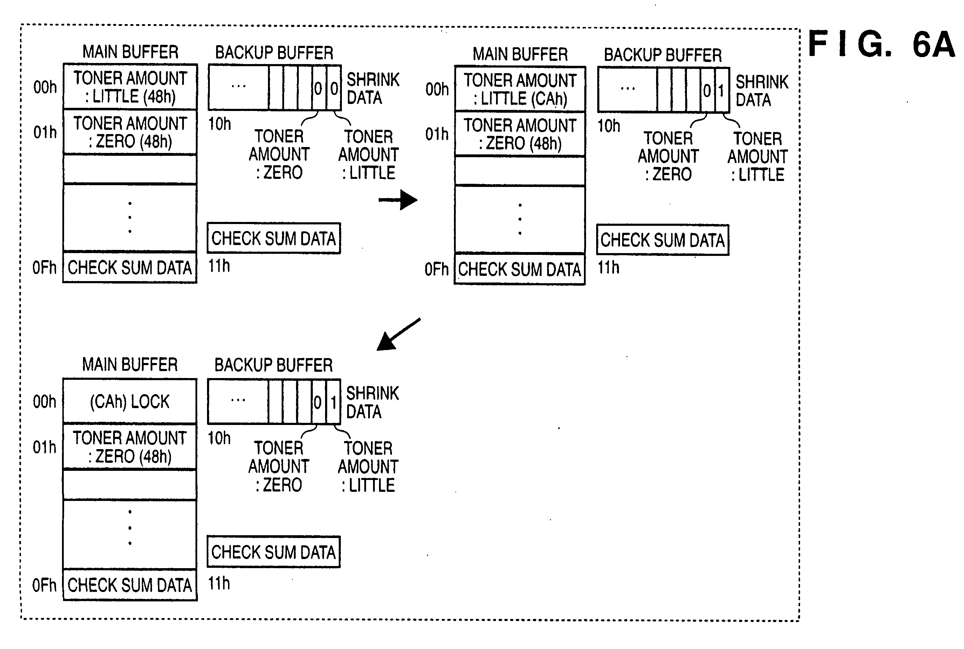

Next, a first embodiment of the present invention will be described in detail with reference to the drawings (Figs. 6A-6B, 8 and 9).

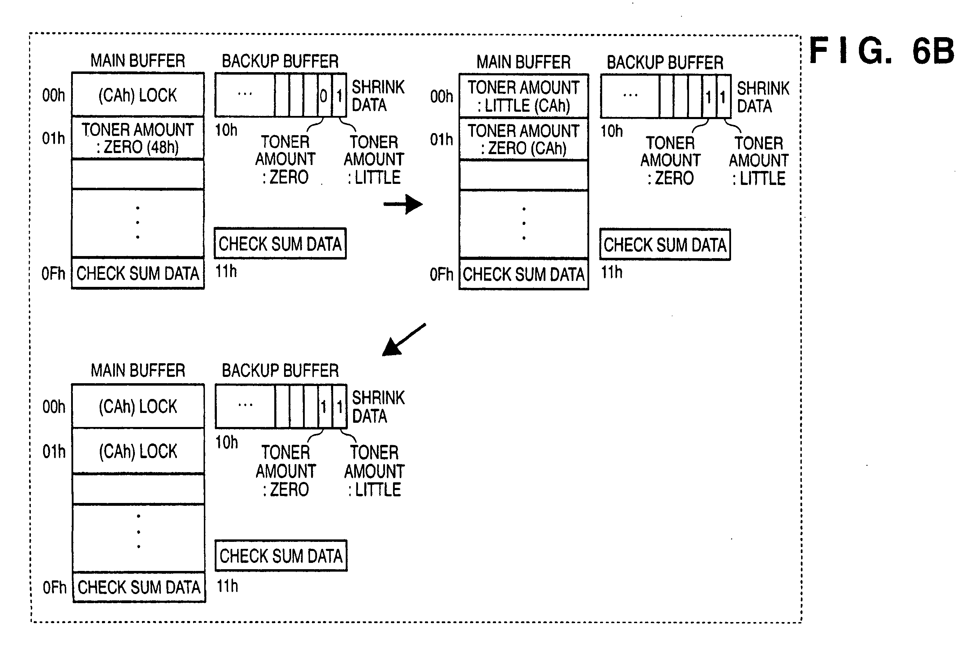

Figs. 6A and 6B are explanatory views showing processing according to the first embodiment. In the first embodiment, a data area of the memory provided inside the process cartridge is a 256 byte area indicated with addresses 00h to FFh. Data rewriting can be disabled in 1-byte units. Further, as bit information (data) stored on the memory, "toner amount: little" indicating that the remaining developing material in the process cartridge has been reduced, and "toner amount: zero" indicating that the developing material has been exhausted are used.

As shown in Fig. 6A, in one buffer of the double buffer structure as the main buffer, to disable data rewriting by bit information (data), "toner amount: little" is allocated to the address 00 area and "toner: zero", to the address 01h area for storage in 1 byte units in correspondence with the rewrite-disable minimum data size, 1 byte. Further, byte information indicating the reset status of arbitrarily-set bit information (data) is "48h", and byte information indicating the set status is "CAh".

The other buffer of the double buffer structure as the backup buffer, 2 bit information (data) "toner amount: little" and "toner amount: zero" are shrunk and allocated to one area at the address 10h. The most significant bit of the address 10h area indicates "toner amount: little", and the next most significant bit, "toner amount: zero". Further, a value "1" of the bit information (data) indicates the set status, and "0", the reset status.

In a new process cartridge, as the information "toner amount: little" and "toner amount: zero" are in the reset status, data on the memory at the address 00h is "48h" indicating the reset status, data at the address 01h, "48h" indicating the reset status, the most significant bit at the address 10h as shrunk information is "0", and the next most significant bit, "0".

As the process cartridge is used, the amount of the developing material is reduced, and if it is determined as "toner amount: little" when the amount of the developing material is equal to or less than a predetermined amount, the data on the memory at the address 00h becomes "CAh" indicating the set status, the data at the address 01h, "48h" indicating the reset status, the most significant bit at the address 10h as the shrunk information, "1", and the next most significant bit, "0". The data at the address 00h is locked, thus rewriting is disabled.

As the process cartridge is further used, the developing material is continuously reduced, and if it is determined as "toner amount: zero" when the amount of developing material is equal to or less than a predetermined amount, the data on the memory at the address 00h is still "CAh" indicating the set status, the data at the address 01h becomes "CAh" indicating the set status, the most significant bit at the address 10h as the shrunk information is still "1", and the next most significant bit becomes "1". The data at the address 01h is locked, thus rewriting is disabled.

### [Check Sum]

The respective buffers of the double buffer structure hold check sum data as error check means. The check sum data of the main buffer is stored in the address 0F area, and the check sum data of the backup buffer is stored in the address 11h area. When "toner amount: little" or "toner amount: zero" stored in the main buffer is changed, the check sum data of the main buffer is rewritten to a value calculated by check sum calculation means after rewriting of the data in the main buffer. When the bit information (data) "toner amount: little" and "toner amount: zero" stored in the address 10h area allocated to the backup buffer are rewritten, the check sum in the backup buffer is rewritten to a value calculated by the check sum calculation means.

If it is detected that power has been turned on or the process cartridge has been exchanged with a new one, the image forming apparatus reads all the values in the data area on the memory, and determines whether or not the check sum data stored in the check sum data areas of the respective buffers correspond with check sum values (obtained by adding up read values) calculated by the check sum calculation means in the printer controller 204. If one of the check sum does not correspond with the calculated check sum in one of the buffers, the other check sum data is compared with the calculated value. As a result, if the other check sum does not correspond with the calculated value, the memory data cannot be recovered. However, if the other check sum correspond with the calculated value, the data of the memory can be recovered by using the data in the buffer where the check sum corresponds with the calculated value. That is, in the case of double buffer having the above-described structure and the check sum does not correspond with the calculated value in the main buffer, the data recovery is performed in accordance with the following procedure.

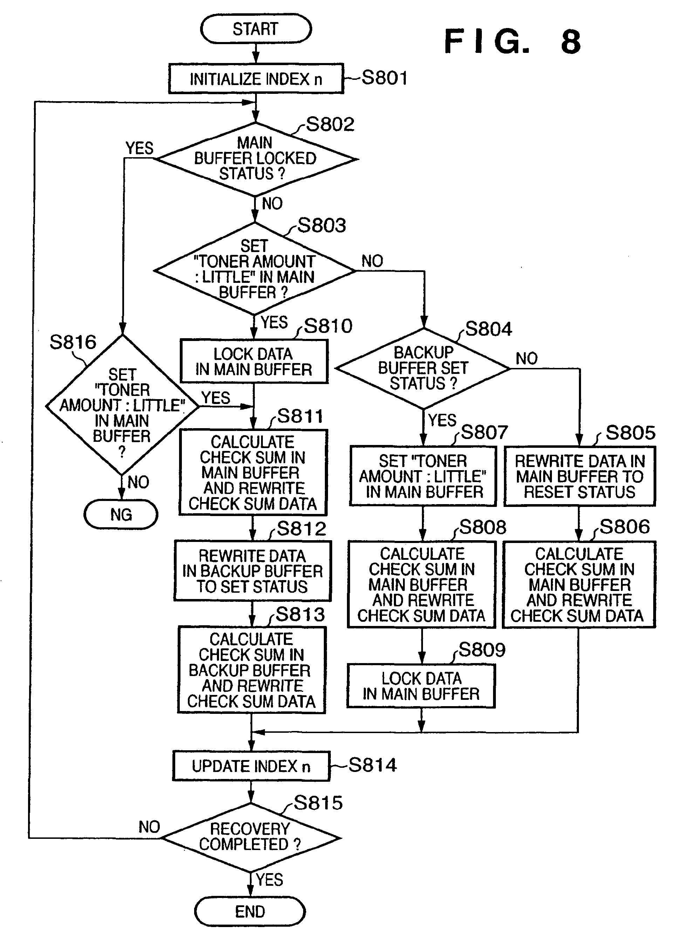

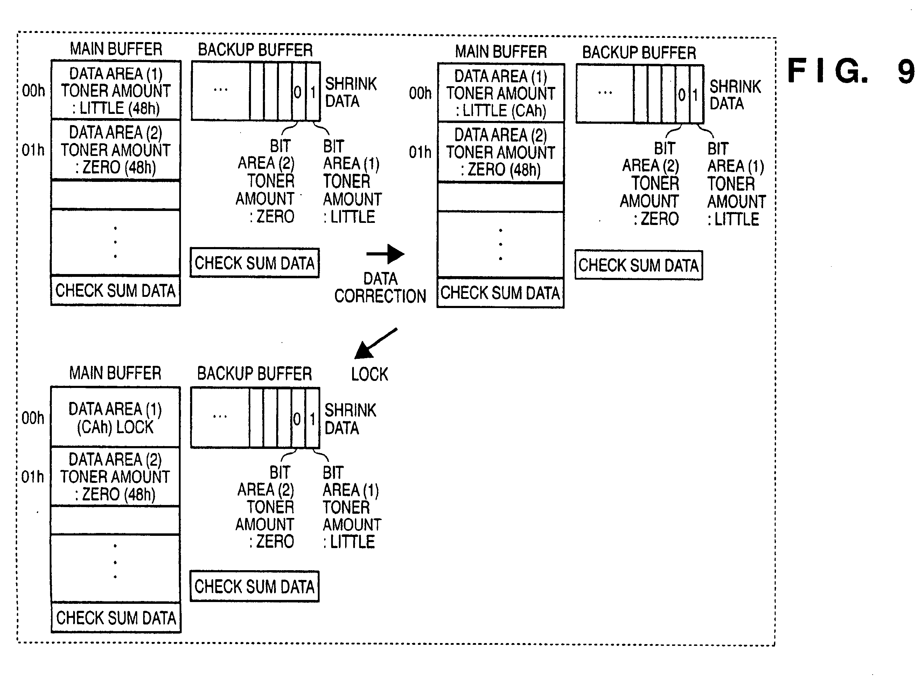

Fig. 8 is a flowchart showing the data recovery processing according to the first embodiment. Fig. 9 is an explanatory view showing an example of data correction and data locking in main buffer and a backup buffer.

First, at step S801, the index n indicating the data area (n) of the main buffer and the bit area (n) of the backup buffer is initialized to "1". Next, at step S802, it is determined whether or not the data area (1) of the main buffer is in the locked status. If it is not in the locked status, the process proceeds to step S803, at which it is determined whether or not "48h" is set in the address 00h data area (1) of the main buffer. If it is not in the set status, the process proceeds to step S804, at which it is determined whether or not the bit area (1) of the backup buffer is in the set status. If it is not in the set status, the process proceeds to step S805, at which the address 00h data area (1) of the main buffer is rewritten to the reset status. Next, at step S806, the check sum in the main buffer is calculated, and the data in the check sum storage area is rewritten.

In this manner, at steps S802 to S806, the address 00h data area (1) of the main buffer is in the reset status or shows the abnormal value and the bit information in the bit area (1) of the backup buffer corresponds to the reset status. In this case, the data in the address 00 data area (1) of the main buffer is rewritten to the reset status (00h) Next, the check sum in the main buffer is calculated, and the data in the check sum storage area is rewritten.

Further, at step S804, if the bit information in the bit area (1) of the backup buffer is in the set status, the process proceeds to step S807, at which the address 00h data area (1) in the main buffer is rewritten to the set status (CAh). Next, at step S808, the check sum in the main buffer is calculated, and the data in the check sum storage area is rewritten. Then at step S809, the address 00h data area (1) of the main buffer is changed to the locked status.

In this manner, in the case of steps S804 -> S807, the address 00h data area (1) of the main buffer is in the reset status or shows the abnormal value, and the bit information in the bit area (1) of the backup buffer corresponds to the set status. In this case, the data in the address 00h data area (1) of the main buffer is rewritten to the set status (CAh), and further, the address 00h area is rewritten to the locked status.

Fig. 9 shows an example of the statuses of main buffer and the backup buffer in the case of steps S804 -> S807.

Further, at step S803, if the address 00h data area (1) of the main buffer is in the set status, the process proceeds to step S810, at which the address 00h data area (1) of the main buffer is changed to the locked status. Next, at step S811, the check sum in the main buffer is calculated, and the data in the check sum storage area is rewritten. Then at step S812, the bit area (1) of the backup buffer is rewritten to the set status. Next, at step S813, the check sum in the backup buffer is calculated, and data in the check sum storage area is rewritten.

In this manner, in the case of steps S803 -> S810, the address 00h data area (1) of the main buffer corresponds to the set status. In this case, the bit information in the bit area (1) of the backup buffer is rewritten to the set status.

Further, at step S802, if the address 00h data area (1) of the main buffer is in the locked status, the process proceeds to step S816, at which it is determined whether or not the address 00h data area (1) of the main buffer is in the set status. As a result, if the address 00h data area (1) of the main buffer is not in the set status, it is determined that the memory cannot be recovered. That is, in the present embodiment, the data in the main buffer is changed to the locked status only at steps S809 and S810 since the data in the main buffer is in the set status (CAh). Further, if the address 00h data area (1) of the main buffer is in the set status, the process proceeds to step S811, to perform the above-described processing.

In this manner, in the case of steps S802 -> S816, the data area (1) of the main buffer corresponds to the locked status. In this case, it is determined whether or not the address 00h data area (1) of the main buffer is in the set status. If it is not in the set status, it is determined that recovery is impossible (NG).

Next, when the above-described processing has been completed, the index n initialized at step S801 (n=1) is updated (n=2) at step S814. Then at step S815, it is determined whether or not all the recovery has been completed. If the recovery has been completed, the process ends, while if the recovery has not been completed, the process returns to step S802, to repeat the above-described processing.

In accordance with the above procedure, data recovery which reflects further latest information can be performed.

The above means can be realized in the form of program set on a microcomputer on the controller.

### [Second Embodiment]

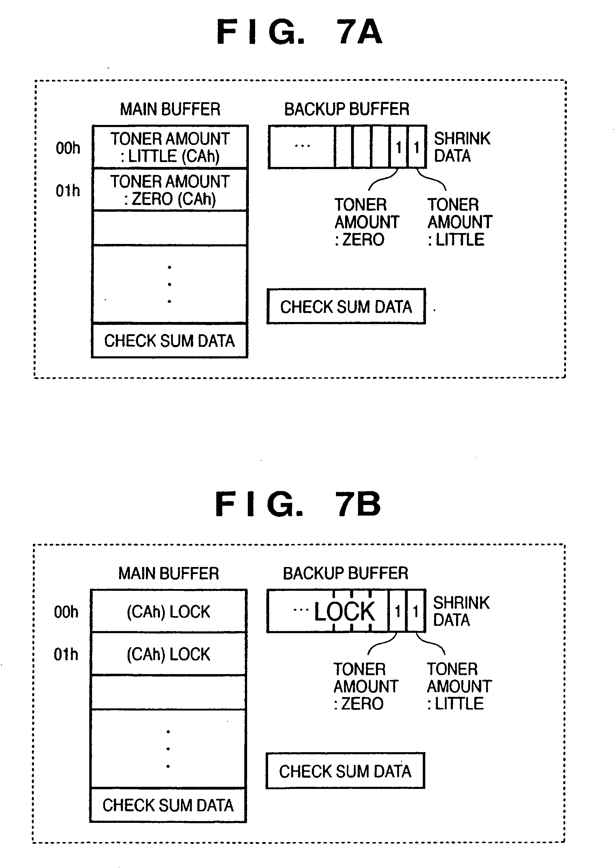

Next, a second embodiment of the present invention will be described in detail with reference to the drawings (Figs. 7A and 7B).

As the data structure of the memory mounted on the process cartridge according to the second embodiment is the same as that of the first embodiment, only the difference from the first embodiment will be described here.

Figs. 7A and 7B are explanatory views showing processing according to the second embodiment. As shown in Fig. 7A, the information, "toner amount: little" and "toner amount: zero" are set at the addresses 00h and 01h corresponding to the main buffer. At this time, shrunk data "toner amount: little" and "toner amount: zero" are set at address 101h for storing shrunk data corresponding to the backup buffer. In this status, as shown in Fig. 7B, the data at the address 00h, the address 01h and the shrunk data at the address 10 of the backup buffer are locked, thus rewriting is disabled.

Note that regarding the check sum, it is handled in the same manner as that in the first embodiment, therefore, the explanation thereof will be omitted.

In the first and second embodiments, as data stored in the memory provided inside the cartridge, the data "toner amount: little" and "toner amount: zero" are used, however, the data are not limited to these data but data on the cartridge such as the number of printing using the cartridge or information indicating whether or not the cartridge is a new article, or the like, may be used.

As described above, according to the embodiments, memory data areas can be efficiently used. Further, as plural information can be obtained at once by accessing a shrunk 1 address, the number of access to the memory can be reduced. Further, appropriate data recovery can be realized.

The present invention can be applied to a system constituted by a plurality of devices (e.g., a host computer, an interface, a reader and a printer) or to an apparatus comprising a single device (e.g., a copy machine or a facsimile apparatus).

Further, as an example which is useful for understanding the present invention, the above can also be achieved by providing a storage medium (or recording medium) holding software program code for performing the aforesaid functions according to the embodiments to a system or an apparatus, reading the program code with a computer (e.g., CPU, MPU) of the system or apparatus from the storage medium, then executing the program.

In this case, the program code read from the storage medium realizes the functions according to the embodiments, and the storage medium holding the program code constitutes the invention.

Further, the storage medium, such as a floppy disk, a hard disk, an optical disk, a magneto-optical disk, a CD-ROM, a CD-R, a DVD, a magnetic tape, a non-volatile type memory card, and ROM can be used for providing the program code.

Furthermore, besides aforesaid functions according to the above, examples which are useful for understanding the present invention realized by executing the program code which is read by a computer, the examples include a case where an OS (operating system) or the like working on the computer performs a part or entire actual processing in accordance with designations of the program code and realizes functions according to the above embodiments.

Furthermore, the examples useful for understanding the present invention also include a case where, after the program code read from the storage medium is written in a function expansion card which is inserted into the computer or in a memory provided in a function expansion unit which is connected to the computer, CPU or the like contained in the function expansion card or unit performs a part or entire actual processing in accordance with designations of the program code and realizes functions of the above embodiments.

As described above, according to the present invention, memory data areas can be efficiently used. Further, in a case where an abnormality occurs in the memory, the status of the memory can be recovered to a status close to the latest status.

The present invention is not limited to the above embodiments and various changes and modifications can be made within the scope of the following claims.

## Claims

1. An image forming apparatus arranged to form an image by using a cartridge (200) having a part of elements for image formation, **characterized by** comprising:
a memory (219) having a first storage area and a second storage area for storing information relating to a condition of said cartridge; and
control means (204) for controlling writing of the information relating to the condition of the cartridge to said memory, and controlling reading of the information relating to the condition of the cartridge from said memory,
wherein said control means is adapted to store the information relating to the condition of the cartridge into the first storage area as a data unit comprising a predetermined number of plural bits, and to store the information relating to the condition of the cartridge into said second storage area as a bit-unit, wherein the bit-unit consists of less bits than the data unit.

2. The image forming apparatus according to claim 1, wherein the second storage area comprises information indicating a status where the information relating to the condition of the cartridge is stored in the first storage area.

3. The image forming apparatus according to claim 1, wherein the elements for image formation include an image carrier (101), a charging member (102) adapted to charge the image carrier, and a developing member (107) adapted to supply developing material to the image carrier,
and wherein said cartridge is further provided with said memory, and said cartridge is removably attached to a main body of the image forming apparatus.

4. The image forming apparatus according to claim 1, wherein said control means is adapted to change the first storage area to a writing-disabled status based on the information stored into the first storage area.

5. The image forming apparatus according to claim 2, wherein said control means is adapted to change the second storage area to a writing-disabled status in a case where all the bits of the second storage area are rewritten.

6. The image forming apparatus according to claim 1, wherein said memory further has a check data storage area for storing check data for detecting an error in data stored in the first and second storage areas,
and wherein said control means is adapted to read the data from the first and second storage areas and to perform calculation, and to detect an error by comparing the results of calculation with the check data stored in said check data storage area.

7. The image forming apparatus according to claim 3, wherein the information relating to the condition of the cartridge is data on an amount of the developing material.

8. A cartridge having a part of elements for image formation, which is removably attachable to an image forming apparatus main body, **characterized by** comprising:
a memory (219) having a first storage area and a second storage area for storing information relating to a condition of the cartridge; and
control means (204) for controlling writing of the information relating to the condition of the cartridge to said memory, and controlling reading of the information relating to the condition of the cartridge from said memory,
wherein said control means is adapted to store the information relating to the condition of the cartridge into the first storage area as a data unit comprising a predetermined number of plural bits, and to store the information relating to the condition of the cartridge into said second storage area as a bit-unit, wherein the bit-unit consists of less bits than the data unit.

9. The cartridge according to claim 8, wherein the second storage area comprises data indicating a status where the information relating to the condition of the cartridge is stored in the first storage area.

10. The cartridge according to claim 8, wherein the control means is adapted to use the information stored into the second storage area for updating the information stored into the first storage area.

11. The cartridge according to claim 8, wherein the first storage area or the second storage area can be set to a writing-disabled status.

12. The cartridge according to claim 8, wherein the elements for image formation include an image carrier, a charging member adapted to charge said image carrier and a developing member adapted to supply developing material to said image carrier,
and wherein the information relating to the condition of the cartridge is data on an amount of the developing material.

## Patentansprüche

1. Bilderzeugungsvorrichtung, die dazu eingerichtet ist, um ein Bild unter Verwendung einer Kartusche (200) mit einem Teil von Elementen für eine Bilderzeugung zu erzeugen, gekennzeichnet durch
einen Speicher (219) mit einem ersten Speicherbereich und einem zweiten Speicherbereich für eine Speicherung von Informationen bezüglich einer Bedingung der Kartusche, und
eine Steuereinrichtung (204) für eine Steuerung eines Schreibens der Informationen bezüglich der Bedingung der Kartusche in den Speicher, und für eine Steuerung eines Lesens der Informationen bezüglich der Bedingung der Kartusche aus dem Speicher,
wobei die Steuereinrichtung dazu eingerichtet ist, um die Informationen bezüglich der Bedingung der Kartusche in den ersten Speicherbereich als eine Dateneinheit mit einer vorbestimmten Anzahl von mehreren Bits zu speichern, und um die Informationen bezüglich der Bedingung der Kartusche in den zweiten Speicherbereich als eine Biteinheit zu schreiben, wobei die Biteinheit aus weniger Bits als die Dateneinheit besteht.

2. Bilderzeugungsvorrichtung nach Anspruch 1, wobei der zweite Speicherbereich Informationen umfasst, die einen Zustand andeuten, bei dem die Informationen bezüglich der Bedingung der Kartusche in dem ersten Speicherbereich gespeichert sind.

3. Bilderzeugungsvorrichtung nach Anspruch 1, wobei die Elemente für eine Bilderzeugung einen Bildträger (101), eine Ladeeinrichtung (102), die dazu eingerichtet ist, um den Bildträger zu laden, und eine Entwicklungseinrichtung (107) aufweist, die dazu eingerichtet ist, um dem Bildträger Entwicklungsmaterial zuzuführen,
und wobei die Kartusche ferner mit dem Speicher versehen ist, und die Kartusche abnehmbar an einem Hauptkörper der Bilderzeugungsvorrichtung angebracht ist.

4. Bilderzeugungsvorrichtung nach Anspruch 1, wobei die Steuereinrichtung dazu eingerichtet ist, um den ersten Speicherbereich basierend auf den in den ersten Speicherbereich geschriebenen Informationen hin zu einem schreibgesperrten Zustand zu ändern.

5. Bilderzeugungsvorrichtung nach Anspruch 2, wobei die Steuereinrichtung dazu eingerichtet ist, um den zweiten Speicherbereich in einem Fall, in dem alle der Bits des zweiten Speicherbereichs neu geschrieben sind, hin zu einem schreibgesperrten Zustand zu ändern.

6. Bilderzeugungsvorrichtung nach Anspruch 1, wobei der Speicher ferner einen Prüfdatenspeicherbereich für eine Speicherung von Prüfdaten für eine Erfassung eines Fehlers in in den ersten und zweiten Speicherbereichen gespeicherten Daten aufweist,
und wobei die Steuereinrichtung dazu eingerichtet ist, um die Daten von den ersten und zweiten Speicherbereichen zu lesen und um eine Berechnung durchzuführen, und um einen Fehler durch Vergleich der Ergebnisse einer Berechnung mit den in dem Prüfdatenspeicherbereich gespeicherten Prüfdaten zu erfassen.

7. Bilderzeugungsvorrichtung nach Anspruch 3, wobei die Informationen bezüglich der Bedingung der Kartusche Daten bezüglich eines Ausmaßes des Entwicklungsmaterials sind.

8. Kartusche mit einem Teil von Elementen für eine Bilderzeugung, die abnehmbar an einen Bilderzeugungsvorrichtungshauptkörper anbringbar ist, gekennzeichnet durch
einen Speicher (219) mit einem ersten Speicherbereich und einem zweiten Speicherbereich für eine Speicherung von Informationen bezüglich einer Bedingung der Kartusche, und
eine Steuereinrichtung (204) für eine Steuerung eines Schreibens der Informationen bezüglich der Bedingung der Kartusche in den Speicher, und für eine Steuerung eines Lesens der Informationen bezüglich der Bedingung der Kartusche aus dem Speicher,
wobei die Steuereinrichtung dazu eingerichtet ist, um die Informationen bezüglich der Bedingung der Kartusche in den ersten Speicherbereich als eine Dateneinheit mit einer vorbestimmten Anzahl von mehreren Bits zu speichern, und um die Informationen bezüglich der Bedingung der Kartusche in den zweiten Speicherbereich als eine Biteinheit zu schreiben, wobei die Biteinheit aus weniger Bits als die Dateneinheit besteht.

9. Kartusche nach Anspruch 8, wobei der zweite Speicherbereich Daten umfasst, die einen Zustand andeuten, bei dem die Informationen bezüglich der Bedingung der Kartusche in dem ersten Speicherbereich gespeichert sind.

10. Kartusche nach Anspruch 8, wobei die Steuereinrichtung dazu eingerichtet ist, um die in den zweiten Speicherbereich gespeicherten Informationen für eine Aktualisierung der in den ersten Speicherbereich gespeicherten Informationen zu verwenden.

11. Kartusche nach Anspruch 8, wobei der erste Speicherbereich oder der zweite Speicherbereich auf einen schreibgesperrten Zustand eingestellt werden kann.

12. Kartusche nach Anspruch 8, wobei die Elemente für eine Bilderzeugung einen Bildträger, eine Ladeeinrichtung, die dazu eingerichtet ist, um den Bildträger zu laden, und eine Entwicklungseinrichtung aufweist, die dazu eingerichtet ist, um dem Bildträger Entwicklungsmaterial zuzuführen,
und wobei die Informationen bezüglich der Bedingung der Kartusche Daten bezüglich eines Ausmaßes des Entwicklungsmaterials sind.

## Revendications

1. Appareil de formation d'image agencé pour former une image en utilisant une cartouche (200) possédant une partie des éléments pour la formation d'image, **caractérisé en ce qu'**il comprend :
une mémoire (219) ayant une première zone de mémorisation et une seconde zone de mémorisation destinée à mémoriser de l'information relative à l'état de ladite cartouche ; et
un moyen (204) de commande destiné à commander l'écriture dans ladite mémoire de l'information relative à l'état de la cartouche, et à commander la lecture dans ladite mémoire de l'information relative à l'état de la cartouche,
dans lequel ledit moyen de commande est apte à mémoriser l'information relative à l'état de la cartouche dans la première zone de mémorisation sous forme d'une unité de données comprenant un nombre prédéterminé de plusieurs bits, et à mémoriser l'information relative à l'état de la cartouche dans ladite seconde zone de mémorisation sous forme d'une unité de bits, dans lequel l'unité de bits est constituée de moins de bits que l'unité de données.

2. Appareil de formation d'image selon la revendication 1, dans lequel la seconde zone de mémorisation comprend de l'information indiquant la situation dans laquelle l'information relative à l'état de la cartouche est mémorisée dans la première zone de mémorisation.

3. Appareil de formation d'image selon la revendication 1, dans lequel les éléments pour la formation d'image incluent un porteur d'image (101), un organe de charge (102) apte à charger le porteur d'image, et un organe de développement (107) apte à délivrer une matière de développement au porteur d'image,
et dans lequel ladite cartouche est en outre pourvue de ladite mémoire, et ladite cartouche est fixée de façon amovible au corps principal de l'appareil de formation d'image.

4. Appareil de formation d'image selon la revendication 1, dans lequel ledit moyen de commande est apte à mettre la première zone de mémorisation dans une situation d'écriture désactivée en se basant sur l'information mémorisée dans la première zone de mémorisation.

5. Appareil de formation d'image selon la revendication 2, dans lequel ledit moyen de commande est apte à mettre la seconde zone de mémorisation dans une situation d'écriture désactivée dans le cas où tous les bits de la seconde zone de mémorisation sont réécrits.

6. Appareil de formation d'image selon la revendication 1, dans lequel ladite mémoire possède en outre une zone de mémorisation de données de vérification destinée à mémoriser des données de vérification pour détecter une erreur dans les données mémorisées dans les première et seconde zones de mémorisation,
et dans lequel ledit moyen de commande est apte à lire les données dans les première et seconde zones de mémorisation et à effectuer un calcul, et à détecter une erreur en comparant les résultats de calcul avec les données de vérification mémorisées dans ladite zone de mémorisation de données de vérification.

7. Appareil de formation d'image selon la revendication 3, dans lequel l'information relative à l'état de la cartouche est une donnée au sujet d'une quantité de la matière de développement.

8. Cartouche possédant une partie des éléments pour la formation d'image, qui est montable de façon amovible sur un corps principal d'appareil de formation d'image, **caractérisée en ce qu'**elle comprend :
une mémoire (219) ayant une première zone de mémorisation et une seconde zone de mémorisation destinée à mémoriser de l'information relative à l'état de la cartouche ; et
un moyen (204) de commande destiné à commander l'écriture dans ladite mémoire de l'information relative à l'état de la cartouche, et à commander la lecture dans ladite mémoire de l'information relative à l'état de la cartouche,
dans laquelle ledit moyen de commande est apte à mémoriser l'information relative à l'état de la cartouche dans la première zone de mémorisation sous forme d'une unité de données comprenant un nombre prédéterminé de plusieurs bits, et à mémoriser l'information relative à l'état de la cartouche dans ladite seconde zone de mémorisation sous forme d'une unité de bits, dans laquelle l'unité de bits est constituée de moins de bits que l'unité de données.

9. Cartouche selon la revendication 8, dans laquelle la seconde zone de mémorisation comprend des données indiquant la situation dans laquelle l'information relative à l'état de la cartouche est mémorisée dans la première zone de mémorisation.

10. Cartouche selon la revendication 8, dans laquelle le moyen de commande est apte à utiliser l'information mémorisée dans la seconde zone de mémorisation pour mettre à jour l'information mémorisée dans la première zone de mémorisation.

11. Cartouche selon la revendication 8, dans laquelle la première zone de mémorisation ou la seconde zone de mémorisation peut être mise dans une situation d'écriture désactivée.

12. Cartouche selon la revendication 8, dans laquelle les éléments pour la formation d'image incluent un porteur d'image, un organe de charge apte à charger ledit porteur d'image et un organe de développement apte à délivrer une matière de développement audit porteur d'image,
et dans laquelle l'information relative à l'état de la cartouche est une donnée au sujet d'une quantité de la matière de développement.
